# FASCICULE DE BREVET EUROPEEN

(11) **EP 2 274 377 B1**
(45) Date de publication et mention de la délivrance du brevet: **01.02.2012**
(21) Numéro de dépôt: 09750040.9
(22) Date de dépôt: 05.05.2009
(51) Int. Cl.: C08L 27/00, C08L 33/00, C08L 27/06, C08L 27/16

(54) **COMPOSITION RENFERMANT UN POLYMÈRE VINYLIQUE HALOGÉNÉ ET UN COPOLYMÈRE PORTEUR DE GROUPES ASSOCIATIFS.**
ZUSAMMENSETZUNG MIT EINEM HALOGENIERTEN VINYLPOLYMER UND EINEM COPOLYMER MIT ASSOZIATIVEN GRUPPEN
COMPOSITION CONTAINING A HALOGENATED VINYL POLYMER AND A COPOLYMER BEARING ASSOCIATIVE GROUPS

(30) Priorité: 07.05.2008 FR 0853029
(43) Date de publication de la demande: 19.01.2011
(73) Titulaire: Arkema France, 92700 Colombes (FR); Centre National de la Recherche Scientifique - CNRS -, 75794 Paris Cedex 16 (FR)
(72) Inventeur: LEIBLER, Ludwik, F-75006 Paris (FR); TOURNILHAC, François-Genes, F-75012 Paris (FR); DUFAURE, Nicolas, F-27300 Bernay (FR); HIDALGO, Manuel, F-69530 Brignais (FR)
(74) Mandataire: Cabinet Plasseraud
(86) Numéro de dépôt international: PCT/FR2009/050826
(87) Numéro de publication internationale: WO 2009/141559

(56) Documents cités:
- EP-A- 0 494 542
- WO-A-2006/016041
- FR-A- 2 095 751
- FR-A- 2 891 548

## Description

La présente invention concerne de nouvelles compositions chimiques à base de polymère vinylique halogéné et de copolymère porteur de groupes associatifs donnés.

Les matériaux dits supramoléculaires sont des matériaux constitués de composés associés par des liaisons non covalentes, telles que des liaisons hydrogène, ioniques et/ou hydrophobes. Il peut s'agir en particulier de polymères sur lesquels sont greffés des groupes associatifs, susceptibles de s'unir par des liaisons hydrogène coopératives. Un avantage de ces matériaux est que ces liaisons physiques sont réversibles, notamment sous l'influence de la température ou par l'action d'un solvant sélectif. La facilité de mise en oeuvre et/ou les propriétés des polymères, comme les propriétés mécaniques, rhéologiques, thermiques, optiques, chimiques, physico-chimiques, peuvent donc se trouver améliorées par le greffage de ces groupes associatifs. Ces derniers peuvent également conférer les propriétés de polymères de grande masse à des polymères de faible masse, plus faciles à préparer de façon contrôlée.

Le document WO 2006/016041 divulgue ainsi des polymères greffés par des groupes associatifs permettant de leur conférer un module élastique plus élevé et une meilleure résistance aux solvants.

Par ailleurs, le document US-2,980,652 divulgue un produit résultant de la réaction d'un motif porteur de groupes associatifs imidazolidone sur un copolymère issu de la copolymérisation de certains monomères à fonctions anhydride, tels que l'anhydride maléique ou l'anhydride itaconique ou l'anhydride citraconique, avec au moins un monomère éthylénique insaturé. Il est indiqué que ce produit a une bonne adhésion aux métaux, verre et matières plastiques. L'Exemple 9 divulgue plus particulièrement le produit de la réaction de l'UDETA sur un copolymère d'anhydride maléique et de méthacrylate de méthyle. Ce produit est formulé en une laque qui peut être pulvérisée sur des panneaux en acier (Exemples 14 et 15).

Dans ce contexte, les Demanderesses se sont intéressées aux moyens permettant de modifier des polymères vinyliques halogénés tels que le PVC en vue d'en faire des matériaux supramoléculaires et d'améliorer ainsi leurs propriétés. Différents essais ont par conséquent été entrepris, dans le but de greffer des groupes associatifs imidazolidone sur du PVC en faisant réagir ce dernier avec la N-aminoéthyl-2-imidazolidone (UDETA).

Il est toutefois apparu aux Demanderesses que l'attaque nucléophile de l'UDETA sur le PVC entraînait une dégradation de ce dernier par déhydrochloration, avec formation concomitante d'acide chlorhydrique, ce qui rendait impossible le greffage direct d'UDETA en masse (sans solvant) sur le PVC dans des appareillages de transformation du PVC tels que des calandres, extrudeuses ou presses.

Pour contourner ce problème, d'autres voies ont été envisagées, qui présentent toutefois toutes des inconvénients majeurs.

Il en est ainsi du greffage en voie solvant qui, bien qu'autorisant un ajustement des conditions opératoires (concentration de PVC et UDETA, choix de solvant, température) pour favoriser la substitution du PVC par l'UDETA aux dépens de sa dégradation, nécessite l'utilisation de grandes quantités de solvant.

En outre, bien qu'elle représente une alternative intéressante, la copolymérisation du chlorure de vinyle monomère avec des monomères méthacryliques porteurs de groupes associatifs de type imidazolidone se heurterait à la difficulté d'obtention de copolymères de composition homogène, compte tenu de la différence importante des rapports de réactivité des monomères méthacryliques et acryliques en général, avec le chlorure de vinyle monomère (CVM) (voir J. BANDRUP et al., Polymer Handbook, 3ème Edition, John Wiley).

Enfin, le greffage de groupes associatifs sur un PVC via des fonctions autres que la fonction amine de l'UDETA, comme la fonction mercaptan, n'offre pas non plus une solution satisfaisante, dans la mesure où la synthèse de molécules portant à la fois des fonctions associatives de type imidazolidone et des motifs de greffage autres qu'amine, comme ces fonctions mercaptan, ajoute des étapes au procédé d'obtention des PVC greffés.

Il est du mérite de la Demanderesse d'avoir mis au point une composition chimique permettant de conduire à un matériau de type supramoléculaire à base de PVC, présentant des propriétés améliorées tout en surmontant les inconvénients précités. Pour atteindre ce but, la Demanderesse a imaginé une "modification indirecte" d'un polymère vinylique halogéné tel que le PVC, par mélange, lors de sa mise en oeuvre, avec un copolymère riche en monomères qui, après polymérisation, donnent des mélanges compatibles avec le PVC et portant par ailleurs des groupes associatifs donnés. Il est ainsi possible d'obtenir un mélange homogène hautement compatible de polymères et de véhiculer indirectement des groupes associatifs dans le PVC en vue de lui conférer différentes propriétés.

Plus précisément, il a été mis en évidence que le polymère porteur des groupes associatifs selon l'invention permettait de conférer des propriétés de forte adhésion aux métaux et de résistance au fluage améliorée au polymère vinylique halogéné tel que le PVC et pouvait éventuellement lui apporter en outre des propriétés rhéologiques, mécaniques ou thermiques améliorées, en particulier un plus grand allongement à la rupture, une meilleure stabilité thermique, une température de ramollissement plus élevée et une meilleure tenue du fondu à bas gradient de cisaillement.

Il est, certes, déjà connu de FR 2 891 548 que l'adhésion du poly(chlorure de vinylidène) ou PVDC sur des surfaces métalliques ou polymères peut être améliorée en le mélangeant à un copolymère renfermant des monomères, notamment acryliques, porteurs de groupes phosphonates et d'autres monomères, notamment acryliques. Il n'est toutefois pas suggéré dans ce document que l'utilisation d'un copolymère porteur de groupes associatifs de type hétérocycle azoté pouvait permettre d'améliorer plusieurs propriétés de polymères vinyliques halogénés tels que le PVDF.

La présente invention a donc pour objet une composition comprenant : (a) au moins un polymère vinylique halogéné et (b) au moins un copolymère renfermant (i) des motifs issus d'un premier monomère (A) rendant ledit copolymère compatible avec ledit polymère vinylique halogéné et (ii) des motifs issus d'un second monomère (B) porteur d'au moins un groupe associatif choisi parmi les groupes imidazolidonyle, triazolyle, triazinyle, bis-uréyle et uréido-pyrimidyle, de préférence imidazolidonyle.

Le polymère halogéné peut en particulier être un homo- ou copolymère fluoré et/ou chloré. Il s'agit généralement d'un polymère thermoplastique.

Un exemple préféré de polymère chloré est le poly(chlorure de vinyle) ou PVC. Un tel polymère est notamment commercialisé par la société ARKEMA sous la dénomination commerciale Lacovyl^{®}. D'autres polymères chlorés utilisables dans cette invention sont le poly(chlorure de vinyle chloré) (PVCC) tel que les Lucalor^{®} d'ARKEMA et les copolymères de chlorure de vinyle avec des monomères tels que l'acrylonitrile, l'éthylène, le propylène, l'acétate de vinyle, ainsi que le poly(chlorure de vinylidène) ou des dérivés acryliques. Il est également possible que le polymère chloré selon l'invention soit un mélange incluant au moins deux des polymères ou copolymères chlorés ci-dessus. Dans le cas des copolymères de chlorure de vinyle, il est préférable que la proportion de motifs chlorure de vinyle soit supérieure à 25% et de préférence inférieure à 99% du poids total du copolymère.

Comme polymères fluorés, on peut notamment citer ceux comprenant un ou plusieurs monomères de formule (I) :

CFX=CHX' (I)

où X et X' désignent indépendamment un atome d'hydrogène ou d'halogène (en particulier de fluor ou de chlore) ou un radical alkyle perhalogéné (en particulier perfluoré). On préfère en particulier que X=F et X'=H.

Comme exemples de polymères fluorés, on peut notamment citer :
- le poly(fluorure de vinylidène) (PVDF),
- les copolymères de fluorure de vinylidène avec par exemple l'hexafluoropropylène (HFP), le chlorotrifluoroéthylène (CTFE), l'hexafluoropropylène (HFP), le trifluoroéthylène (VF3) ou le tétrafluoroéthylène (TFE),
- les homo- et copolymères de trifluoroéthylène (VF3),
- les copolymères fluoroéthylène / propylène (FEP),
- les copolymères d'éthylène avec le fluoroéthylène/propylène (FEP), le tétrafluoroéthylène (TFE), le perfluorométhylvinyl éther (PFMVE), le chlorotrifluoroéthylène (CTFE) ou l'hexafluoropropylène (HFP), et
- leurs mélanges,
certains de ces polymères étant notamment commercialisés par la société ARKEMA sous la dénomination commerciale Kynar^{®}.

Le PVDF et le PVC sont préférés pour une utilisation dans la présente invention.

Le polymère vinylique halogéné peut être obtenu suivant des procédés de polymérisation en suspension, en micro-suspension, en émulsion ou en masse, bien connus de l'homme du métier.

Il peut représenter de 1 à 99,5 % en poids, et de préférence de 50 à 99% en poids par rapport au poids total de la composition selon l'invention.

Ce polymère vinylique halogéné peut être formulé dans une composition conduisant, après mise en oeuvre, à un matériau final soit rigide, soit plastifié. La plastification est obtenue par incorporation dans la composition incluant le polymère vinylique halogéné d'au moins un plastifiant qui peut par exemple être choisi parmi : les plastifiants polymères tels que les polyphtalates et les polyadipates ; les plastifiants monomères tels que les azélates, les trimellitates (TOTM, TEHTM...), les sébaçates (DIOS, DINS, DIDS...), les adipates (DOA, DEHA, DINA, DIPA...), les phtalates (DOP, DEHP, DIDP, DINP...), les citrates, les benzoates, les tallates, les glutarates, les fumarates, les maléates, les oléates, les palmitates, les acétates comme, en particulier les monoglycérides acétylés ; et leurs mélanges. Les phtalates tels que le di-octyl phtalate, les dialkyl adipates tels que le ditridécyl adipate (DTDA), les monoglycérides di-acétylés tels que le glycérol monolaurate di-acétate et les dialkyl sébaçates tels que le diisodécyl sébaçate (DIDS) sont préférés pour une utilisation dans la présente invention. La quantité de plastifiant peut par exemple représenter de 60 à 100% en poids, par rapport au poids du polymère vinylique halogéné.

Outre le plastifiant éventuel, ce polymère vinylique halogéné est associé, dans la composition selon l'invention, à un copolymère portant des groupes associatifs, pour former un "compound".

Ce copolymère renferme des motifs d'au moins un premier monomère (A) rendant ledit copolymère compatible avec ledit polymère vinylique halogéné et renferme au moins un second motif (B), distinct du motif (A) et porteur d'un groupe associatif donné. Le monomère (A) représente de préférence au moins 20% en mole et avantageusement au plus 80% en mole du copolymère.

Par « compatible », on entend que le polymère vinylique halogéné et le copolymère (b) forment un mélange homogène, en ce sens qu'ils présentent une miscibilité telle qu'au moins la phase amorphe (non cristalline) du polymère vinylique halogéné soit gonflée par le copolymère ou que cette phase amorphe du polymère vinylique halogéné gonfle le copolymère, dans les proportions utilisées dans le mélange. Cela se traduit par le fait qu'au moins la phase amorphe du polymère vinylique halogéné et le copolymère ne forment qu'une seule phase. Selon la nature du copolymère et en particulier du monomère (A) utilisé pour sa synthèse, la compatibilité au sens de l'invention avec le polymère vinylique halogéné peut être obtenue dans des proportions variables du mélange des deux polymères. Cette compatibilité peut être mise en évidence par des mesures physiques de miscibilité.

Cette miscibilité peut être repérée par différentes méthodes analytiques connues de l'homme du métier comme la microscopie électronique à balayage (MEB) ou à transmission (MET) ou encore la microscopie de force atomique (AFM), permettant souvent de repérer des inhomogénéités des mélanges sous la forme de domaines de taille caractéristique supérieure à 1 micrometre (immiscibilité), ainsi que par des mesures de température de transition vitreuse, Tg, du mélange des deux polymères : la miscibilité se traduit alors par l'existence d'une seule Tg pour le mélange. Les méthodes de mesure de la Tg des polymères et des mélanges de polymères sont connues de l'homme du métier et incluent la calorimétrie différentielle à balayage (DSC), la volumétrie ou l'analyse mécanique dynamique (DMA). Il est également possible de déterminer la miscibilité par des mesures optiques comme la transparence. Lorsque la miscibilité est déterminée par des mesures de transparence dans les systèmes polymères peu ou pas cristallins, comme le PVC, la différence de transparence entre celle d'une éprouvette ou fiche du mélange, d'une épaisseur de 2 à 4 mm, et la transparence d'une éprouvette ou fiche du polymère vinylique halogéné seul et de la même épaisseur, ne doit pas être perceptible à l'oeil nu; autrement dit, lorsque le mélange n'est pas compatible au sens de l'invention, apparaît, en comparaison avec l'échantillon du polymère vinylique halogéné seul, un voile ou une opacité suffisamment perceptible à l'oeil et facilement quantifiable par des mesures optiques de transparence connues de l'homme du métier (comme le pourcentage de transmittance ou le pourcentage de turbidité). Lorsque le polymère vinylique halogéné est considérablement cristallin, comme dans le cas du PVDF, la comparaison de transparences entre le polymère vinylique halogéné seul et son mélange avec le copolymère peut encore se faire sur des films très minces, typiquement sur des épaisseurs de l'ordre de 25 micrometres

Ainsi, tout copolymère portant des groupes associatifs et compatible, dans le sens expliqué ci-dessus, avec le polymère vinylique halogéné, peut être utilisé selon l'invention, en particulier, tout copolymère à base d'un monomère (A) dont l'homopolymère correspondant est connu pour être miscible avec le polymère vinylique halogéné ou dont la présence de motifs issus du monomère (A) le rend compatible avec le polymère vinylique halogéné. Comme exemples non exclusifs de monomères (A), on peut citer les monomères (méth)acryliques tels que le méthyl méthacrylate, le méthacrylate de polyéthylène glycol, le méthacrylate de méthoxy polyéthylène glycol et l'acrylonitrile ; ainsi que l'anhydride maléique. Comme exemples de copolymères portant des groupes associatifs pouvant être mélangés, à des proportions variables selon leur nature et celle du polymère vinylique halogéné, avec le polymère vinylique halogéné pour obtenir la compatibilité et les effets de « modification indirecte » par des liaisons physiques réversibles selon l'invention, on peut citer les copolymères de méthyl méthacrylate (dits copolymères type PMMA) portant des groupes associatifs, les copolymères de monomères à chaîne latérale de polyéthylène glycol (dits copolymères à chaîne latérale PEG) portant des groupes associatifs, les copolymères de l'anhydride maléique portant des groupes associatifs ou les copolymères d'acrylonitrile portant des groupes associatifs.

Par "groupes associatifs", on entend des groupes susceptibles de s'associer les uns aux autres par des liaisons hydrogène, avantageusement par 1 à 6 liaisons hydrogène. Les groupes associatifs utilisables selon l'invention sont choisis parmi les groupes imidazolidonyle, triazolyle, triazinyle, bis-uréyle, uréido-pyrimidyle, les groupes imidazolidonyle étant préférés.

Selon un mode de réalisation préféré de l'invention, les groupes associatifs peuvent être introduits lors de la formation du copolymère. Le copolymère est ainsi susceptible d'être obtenu par copolymérisation du monomère (A) avec un monomère (B) qui porte les groupes associatifs et éventuellement un ou plusieurs autres monomères, de préférence à partir :
- d'une part, d'un monomère (A) qui est un monomère (méth)acrylique choisi parmi : le méthacrylate de méthyle, le (méth)acrylate de (méthoxy)polyéthylèneglycol, l'acrylonitrile et l'anhydride maléique,
- d'autre part, d'un monomère (B) porteur de groupes associatifs tels que définis précédemment, de préférence de groupes imidazolidonyle, qui est avantageusement choisi parmi : le méthacrylate d'éthylimidazolidone (ou MEIO) et le méthacrylamide d'éthylimidazolidone (ou WAM II) et
- éventuellement, d'un ou plusieurs autres monomères choisis parmi les acides acrylique ou méthacrylique, leurs esters, leurs amides ou leurs sels, l'acide itaconique, ses esters, ses amides ou ses sels, et le styrène et ses dérivés comme le 4-styrène sulfonate.

Un tel copolymère peut être préparé selon des méthodes connues de polymérisation radicalaire en solution dans des solvants comme le chloroforme ou le tétra-hydrofurane ou en milieu dispersé comme, en particulier, en suspension ou en émulsion aqueuse. De manière préférée, le copolymère utilisé dans l'invention peut être obtenu par polymérisation radicalaire en suspension ou en émulsion aqueuse. Dans le cas des polymérisations en solution ou en suspension aqueuse, la polymérisation peut être amorcée à l'aide d'amorceurs de polymérisation radicalaire solubles dans le mélange de monomères. Différents mécanismes de génération de radicaux peuvent être mis en oeuvre comme, par exemple, la décomposition thermique, les réactions d'oxydo-réduction, la décomposition provoquée par un rayonnement électromagnétique et, en particulier, un rayonnement dans l'ultra-violet. Des exemples non-exclusifs d'amorceurs incluent les hydroperoxydes, les peroxydes de dialkyle, les peroxydes de diacyle, les peroxyesters, les peroxydicarbonates, les peroxyacétals, les composés azoïques et leurs combinaison avec des agents favorisant leur décomposition comme des amines et des atomes métalliques.

A titre d'exemples d'hydroperoxydes, on peut citer l'hydroperoxyde de tert-butyle, l'hydroperoxyde de tert-amyle, l'hydroperoxyde de cumyle, le 2,5-diméthyl-2,5 di(hydroperoxy)hexane, le monohydroperoxyde de diisopropyl benzène et l'hydroperoxyde de paramenthane.

A titre d'exemples de peroxydes de dialkyle, on peut citer le 2,5-diméthyl-2,5-di(te-rt-butylperoxy)hexyne-(3), le peroxyde de di-tert-butyle, le peroxyde de di-tert-amyle, le 1,3-di(tertbutylperoxyisopropyl)benzène, le 2,5-diméthyl-2,5-di(tert-butylperoxy)hexyne, le 1,1,4,4,7,7-hexaméthylcyclo-4,7-diperoxynonane, le 3,3,6,6,9,9-hexaméthylcyclo-1,2,4,5-tétraoxanonane.

A titre d'exemples de peroxydes de diacyle, on peut citer le peroxyde de benzoyle, le peroxyde de lauroyle, le peroxyde de décanoyle, le peroxyde de 3,5,5-triméhylhexanoyle, le peroxyde d'acétyle et de cyclohexyl sulfonyle.

A titre d'exemples de peroxyesters, on peut citer le peroxybenzoate de tert-butyle, le peroxyacétate de tert-butyle, le peroxy-3,5,5-triméthylhexanoate de tert-butyle, le peroxy-3,5,5-triméthylhexanoate de tert-amyle, le 2,5-diméthyl-2,5-di(benzoylperoxy)hexane, le 00-tert-butyl-0-isopropylmonoperoxycarbonate, le 00-tert-butyl-0-(2-éthylhexyl)-monoperoxycarbonate, le peroxyisobutyrate de tert-butyle, le peroxy-2-éthylhexanoate de tert-butyle, le peroxy-2-éthylhexanoate de tert-amyle, le 2,5-diméthyl-2,5-di(2-éthylhexanoylperoxy)hexane, le peroxynéodécanoate de tert-butyle, le peroxyisononanoate de tert-butyle, le peroxypyvalate de tert-butyle, le peroxypyvalate de tert-amyle, le peroxynéodécanoate d'α-cumyle, le peroxydécanoate de tert-amyle, le 3-hydroxy-1,1-diméthylbutylperoxynéodécanoate de tert-butyle et le peroxymaléate de tert-butyle.

A titre d'exemples de peroxydicarbonates, on peut citer le peroxydicarbonate de di(2-éthylhexyle), le peroxydicarbonate de dicyclohexyle, le peroxydicarbonate de di(n-propyle), le peroxydicarbonate de di(4-tert-butylcyclohexyle).

A titre d'exemples de peroxyacétals, on peut citer le 1,1-di(tert-butylperoxy)cyclohexane, le 1,1-di(tertbutylperoxy)3,3,5-triméthylcyclohexane, le 3,3-di(tertbutylperoxy)butyrate d'éthyle, le 3,3-di(tert-amylperoxy) butyrate d'éthyle, le 3,3-di(tert-amylperoxy)butyrate d'éthyle, le 4,4-di(tert-butylperoxy)valérate de n-butyle, le 2,2-di(tert-butylperoxy)butane, le 1,1-di(tert-amylperoxy)cyclohexane, le 2,2-bis[4,4-di(tertbutylperoxy)chyclohexyl]propane.

A titre d'exemples de composés azoïques, on peut citer le 2,2' azo-bis isobutyronitrile ou 2-[(*E*)-(1-cyano-1-méthyléthyl)diazènyl]-2-methylpropanenitrile, le 2-[(*E*)-(1-cyano-1-méthylpropyl)diazènyl]-2-méthylbutane-nitrile ou azo-bis méthyl butyronitrile, l'azo-bis isobutyramide, le diméthyl azo-bis di isobutyrate, le diéthyl azo-bis isobutyrate, l'acide cyanovalérique ou acide 4-[(*E*)-(3-carboxy-1-cyano-1-méthylpropyl)diazènyl]-4-cyanopentanoique.

La polymérisation peut également être amorcée par des amorceurs-contrôleurs de polymérisation radicalaire contrôlée, tels que les alcoxyamines et, plus particulièrement par l'acide 2-méthyl-2-[N-tertiobutyl-N-(diéthoxyphosphoryl-2,2-diméthylpropyl)aminoxy] propionique de formule suivante : 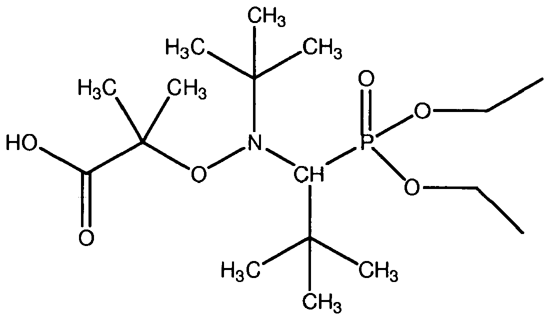 commercialisé par Arkema sous la marque BlocBuilder^{®} et ses sels métalliques ou organiques.

Ces amorceurs peuvent être utilisés à hauteur de 0,05 à 10% en poids par rapport au poids total des monomères.

Dans le cas des polymérisations en solution organique, en suspension ou en émulsion aqueuse, en plus des amorceurs de polymérisation, il peut s'avérer utile de dissoudre dans les monomères d'autres additifs, parmi lesquels on peut citer les agents de transfert de chaîne, permettant de diminuer les masses moléculaires. A titre d'exemples d'agents de transfert de chaîne on peut citer les alkyl mercaptans, comme le méthyl mercaptan, l'éthyl mercaptan, le n-propyl mercaptan, l'isopropyl mercaptan, le n-butyl mercaptan, le tert-butyl mercaptan, le cyclohexyl mercaptan, le benzyl mercaptan, le n-octyl mercaptan, le tert-nonyl mercaptan, le n-dodécyl mercaptan, le tert-dodécyl mercaptan, les alkyl thioglycolates comme le méthyl thioglycolate, l'éthyl thioglycolate, le 2-éthyl-hexyl thioglycolate ou l'isooctyl thioglycolate. Les agents de transfert de chaîne sont généralement utilisés dans des proportions comprises entre 0,01 et 10%, et de préférence entre 0,5 et 2% en poids par rapport au poids total des monomères.

Dans les cas des polymérisations en solution organique ou en milieu dispersé comme la polymérisation en suspension ou en émulsion aqueuses, il est également possible de dissoudre dans les monomères d'autres additifs tels que des antioxydants, comme le butylhydroxytoluène (BHT), des biocides et/ou des activateurs d'amorceurs de polymérisation. Ces additifs sont généralement utilisés dans des proportions comprises entre 0,01% et 5% en poids par rapport au poids total des monomères.

Dans le cas des polymérisations en suspension aqueuse, le mélange des monomères comprenant l'amorceur de polymérisation, et éventuellement d'autres additifs dissous dans ce mélange, est dispersé dans une phase aqueuse continue contenant un agent de suspension favorisant la stabilité de la suspension pendant la polymérisation. Parmi les agents de suspension pouvant être utilisés, on peut citer, à titre d'exemple non exclusif, les poudres minérales finement divisées comme le talc ou le triphosphate de calcium, les polymères agents de suspension, parfois appelés également colloïdes protecteurs, comme les alcools polyvinyliques partiellement ou complètement hydrolysés, les copolymères de styrène et de méthyl méthacrylate avec ou sans un tiers monomère comme l'α-méthyl styrène, certains tensioactifs comme les esters éthoxylés de sorbitan, les polymères hydrosolubles épaississants comme l'hydroxyéthyl cellulose, les polymères et copolymères à base d'acide (méth)acrylique ou ses sels, les polymères et copolymères à base de (méth)acrylamide et ses dérivés ou le polyacrylamido (méthyl) propane sulfonate. Les agents de suspension sont généralement utilisés dans des proportions allant de 0,05 à 10%, et de préférence de 0,1% à 5% en poids par rapport au poids total de la phase dispersée contenant les monomères.

En combinaison avec les agents de suspension, il est possible de prévoir d'autres additifs ajoutés à la phase aqueuse, tels que des sels, comme les sulfates de sodium ou ammonium, parfois appelés « extenders », permettant de contrôler la force ionique du milieu, ou des régulateurs de pH comme le bicarbonate de sodium. Ils peuvent être utilisés dans des proportions allant de 0,05 à 5% en poids par rapport au poids total de la phase aqueuse continue.

Dans le cas des polymérisations en émulsion aqueuse, des amorceurs de polymérisation radicalaire solubles dans l'eau sont utilisés. Différents mécanismes de génération de radicaux peuvent être mis en oeuvre comme, par exemple, la décomposition thermique, les réactions d'oxydoréduction, la décomposition provoquée par un rayonnement électromagnétique et, en particulier, un rayonnement dans l'ultra-violet. Des exemples non-exclusifs d'amorceurs hydrosolubles incluent les hydroperoxydes comme l'hydroperoxyde de tert-butyle, les composés azoïques hydrosolubles tels que le 2,2'-Azobis-(2-amidinopropane)dihydrochlorure et les sels organiques ou minéraux de l'acide 4,4'-Azobis-(4-cyano valérique), les oxydants minéraux tels que les persulfates de sodium, potassium ou ammonium, l'eau oxygénée, les perchlorates, les percarbonates et les sels ferriques. Ces oxydants peuvent être utilisés seuls ou en combinaison avec des réducteurs minéraux ou organiques tels que le bisulfite ou le métabisulfite de sodium ou de potassium, la vitamine C (acide ascorbique), les hypophosphites de sodium ou de potassium. Ces réducteurs organiques ou minéraux peuvent également être utilisés seuls, c'est-à-dire en l'absence d'oxydants minéraux. Les amorceurs solubles dans la phase aqueuse sont utilisés dans le cas des polymérisations en émulsion, dans des proportions allant de 0,01 à 10% en poids par rapport au poids total des monomères.

Dans le cas des polymérisations en émulsion aqueuse, des tensioactifs ou des stabilisants permettant de constituer les émulsions de départ et de stabiliser les latex finaux obtenus peuvent être utilisés. Trois familles de tensioactifs ou stabilisants peuvent être considérées, à savoir :
1) les molécules tensioactives d'origine naturelle ou synthétique ayant un effet dispersant et stabilisant par répulsion électrostatique et comprenant les molécules amphiphiles chargées positivement ou négativement, ou formant des zwitterions (amphotères), en phase aqueuse, parmi lesquelles on peut citer, à titre d'exemples non exclusifs : les alkyl sulfates ou sulfonates de sodium ou potassium, en particulier le dodécyl sulfate de sodium, les alkyl aryl sulfates ou sulfonates de sodium ou potassium, en particulier le dodécyl benzène sulfonate de sodium les sels de potassium, sodium ou ammonium des acides gras, en particulier le stéarate de sodium, les diphenyl oxydes alkylés et disulfonés, en particulier les tensioactifs commerciaux de la gamme Dowfax^{®}, comme le Dowfax^{®} 2A1, les sulfosuccinates et, en particulier, les tensioactifs commerciaux de la gamme Aerosol^{®} comme l'Aerosol^{®} MA 80 qui est le sodium dihexyl sulfosuccinate ou l'Aerosol^{®} OT-75 qui est le sodium di-octyl sulfosuccinate, les esters phosphoriques, les amines grasses, les polyamines et leurs sels, les sels d'ammonium quaternaire, comme les alkyl triméthyl chlorures ou bromures d'ammonium, les betaïnes comme les N-alkyl betaïnes ou les sulfobetaïnes, les imidazolines carboxylates, ainsi que les dérivés éthoxylés de tous ces composés ;
2) les molécules tensioactives ayant un effet dispersant et stabilisant par répulsion stérique, non chargées ou non-ioniques, parmi lesquelles on peut citer, à titre d'exemples non exclusifs : les alkyl phénols éthoxylés, les alcools gras éthoxylés, les copolymères à blocs de polyoxyde d'éthylène et polyoxyde de propylène, comme ceux de la gamme Pluronic^{®}, les esters d'acides gras, les alkyl polyglycosides ;
3) les molécules polymériques amphiphiles ou complètement hydrophiles, chargées ou non, parmi lesquelles on peut citer, à titre d'exemples non exclusifs : les polymères d'origine naturelle ou synthétique solubles dans l'eau tels que les polymères et copolymères de l'acide (méth)acrylique et leurs sels, les polymères et copolymères de l'acrylamide et ses dérivés, les polymères à base d'alcool vinylique et acétate de vinyle, l'hydroxyéthyl cellulose et l'hydroxyéthyl cellulose modifiée hydrophobe, le polyvinyl caprolactame, et la polyvinyl pyrrolidone.

Ces dispersants ou stabilisants utilisés en polymérisation en émulsion sont généralement présents à hauteur de 0,1 à 10% en poids par rapport au poids total des monomères. Il est également possible de conduire des polymérisations en émulsion en absence de tensioactifs ou agents stabilisants ou dispersants ; dans ce cas particulier, les proportions finales de polymère, exprimées en taux de solides final ou extrait sec final, c'est-à-dire, après évaporation des volatils et, en particulier de l'eau, sont inférieures à 20% en poids, par rapport au poids total du latex issu de la polymérisation en émulsion.

Les procédés en solution, d'une part, et en suspension ou émulsion aqueuse, d'autre part, pouvant être utilisés pour la synthèse des copolymères portant les groupes associatifs, utilisés selon l'invention, peuvent être conduits à pression atmosphérique ou sous pression et à des températures de polymérisation comprises entre 5°C et 180°C. De manière préférée, le copolymère est obtenu par un procédé en suspension ou en émulsion aqueuse à pression atmosphérique et à des températures de polymérisation comprises entre 50 et 95°C. Les concentrations finales ou après polymérisation de polymère et d'autres composants non volatils pour les polymérisations en solution, suspension aqueuse ou émulsion aqueuse se trouvent comprises entre 1 et 75% et de préférence entre 15 et 50% en poids, exprimées en extrait sec ou taux de solides final, par rapport au poids total de la solution, suspension ou émulsion (latex).

Le procédé de synthèse du copolymère peut être continu ou par lots (« batch ») ou encore de type semi-continu, c'est-à-dire avec ajouts dosés de composants, comme par exemple des ajouts dosés de monomères, tels quels ou pré-émulsifiés, des ajouts dosés d'additifs comme des dispersants ou stabilisants, des amorceurs, ou d'autres additifs.

D'une manière générale, les procédés préférés de suspension aqueuse et d'émulsion aqueuse, utilisés pour l'obtention du copolymère portant les groupes associatifs selon l'invention, sont bien connus de l'homme du métier et décrits dans des ouvrages généraux et spécialisés, comme, par exemple, dans le Chapitre 7 du livre Les latex synthétiques : Elaboration, Propriétés, Applications, coordonné par C. Pichot et J.C. Daniel (Editions TEC&DOC de Lavoisier, France, 2006).

Dans une autre forme d'exécution de l'invention, le copolymère peut être obtenu par greffage des groupes associatifs sur un copolymère déjà constitué comprenant, outre le monomère (A), un monomère (B') renfermant au moins une fonction réactive, telle qu'une fonction acide, anhydride, alcool, mercaptan, amine, époxy ou isocyanate, de préférence anhydride, par réaction d'un ou plusieurs agents de modification, portant d'une part un groupe associatif, et d'autre part un groupe réactif, choisi parmi les groupes amine, mercaptan, époxy, isocyanate, anhydride, alcool, de préférence amine, ledit groupe réactif étant susceptible de former une liaison covalente avec ladite fonction réactive.

Dans cette forme d'exécution, le copolymère porteur de fonctions réactives peut par exemple être un homo- ou copolymère de (méth)acrylate d'alkyle, ayant par exemple une masse moléculaire moyenne en nombre allant de 1.000 à 1.000.000 g/mol, et de préférence de 5.000 à 100.000 g/mol, renfermant avantageusement des fonctions anhydride glutarique. Celui-ci peut être obtenu à partir d'un copolymère de (méth)acrylate d'alkyle, notamment de méthyle, et d'acide (méth)acrylique, comme le grade Altuglas^{®} HT 121 d'Arkema, renfermant par exemple entre 1 et 15 % en moles d'unités acide (méth)acrylique, suivant un procédé de cyclisation, dans des conditions de catalyse basique, qui peut notamment être mis en oeuvre dans une extrudeuse. Parmi les catalyseurs basiques préférés, on compte la soude et le méthoxyde de sodium, CH₃0Na. La cyclisation peut s'effectuer par passage dans une extrudeuse à vis simple ou double du copolymère de départ avec le catalyseur et éventuellement d'autres additifs, tels que des lubrifiants, des antioxydants, des colorants, et/ou des correcteurs optiques pour donner du brillant et réduire le jaunissement. La température d'extrusion peut être comprise entre 200 et 300° C et de préférence entre 250 et 280°C. Un ou plusieurs passages en extrusion peuvent être effectués pour obtenir le niveau de cyclisation (formation d'anhydride glutarique) souhaité. Le taux de cyclisation peut être contrôlé pour ajuster le taux de fonctions anhydride obtenues, qui peut par exemple aller de 0,1 à 20% en moles.

On comprend donc que, dans cette forme d'exécution, le copolymère comportant le monomère (B') est susceptible d'être obtenu par cyclisation d'un copolymère de (méth)acrylate d'alkyle et d'acide (méth)acrylique, dans des conditions de catalyse basique.

Les groupes réactif et associatif, respectivement, de l'agent de modification peuvent être séparés par une chaîne rigide ou flexible, constituée de 1 à 30 atomes de carbone dont certains au moins peuvent être substitués, et éventuellement d'un ou plusieurs hétéroatomes, choisis en particulier parmi le soufre, l'oxygène et l'azote, ladite chaîne renfermant éventuellement un ou plusieurs ponts ester ou amide. Il s'agit de préférence d'une chaîne alkylène linéaire ou ramifiée en C₁-C₁₀ éventuellement interrompue par un ou plusieurs atomes d'azote, plus préférentiellement d'une chaîne alkylène linéaire en C₁-C₆.

Des exemples préférés d'agents de modification sont les amines portant un groupe imidazolidonyle telles que la 1-(2-aminoéthyl)imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1-H-1,2,4-triazole (3-ATA) et le 4-amino-1-H-1,2,4-triazole (4-ATA). L'UDETA est préférée pour une utilisation dans la présente invention.

Les amines portant des fonctions imidazolidone peuvent elles-mêmes être issues de la réaction de l'urée avec au moins un composé choisi parmi les alkylèneamines et les amines. Ainsi, l'UDETA peut être préparée en faisant réagir de l'urée avec de la diéthylène triamine(DETA).

Le nombre de groupes associatifs porté par le copolymère dans cette forme d'exécution selon l'invention peut être simplement ajusté en faisant varier la quantité d'agent de modification ou le temps et la température de réaction. On préfère en général que la quantité d'agent de modification représente de 0,5 à 15% en poids, plus préférentiellement de 1 à 5% en poids, par rapport au poids du copolymère porteur de fonctions réactives et/ou que le nombre moyen de groupes associatifs par chaîne de copolymère soit compris entre 1 et 30.

Le procédé de greffage est réalisé en faisant réagir l'agent de modification et le copolymère porteur de fonctions réactives. Cette étape peut être réalisée à l'état fondu, par exemple dans une extrudeuse ou un mélangeur interne à une température qui peut aller de 150°C à 300°C et, de préférence de 200 à 280°C. L'agent de modification est mélangé au polymère seul, ou à l'aide d'un additif permettant l'imprégnation des grains de polymère solide par l'agent de modification préalablement fondu. Le mélange solide avant introduction dans l'extrudeuse ou le mélangeur peut être rendu plus homogène par réfrigération pour faire solidifier l'agent de modification. Il est également possible de doser ce dernier dans l'extrudeuse ou le mélangeur après un début de fusion du polymère à greffer. Le temps à la température de greffage peut aller de quelques secondes à 5 minutes. L'agent de modification peut être introduit dans l'extrudeuse sous forme de mélange-maître dans un polymère qui, de préférence, peut être le polymère à greffer. Selon ce mode d'introduction, le mélange maître peut comporter jusqu'à 30% en poids de l'agent de modification ; ensuite, le mélange maître est « dilué » dans le polymère à greffer lors de l'opération de greffage Selon une autre possibilité, le greffage peut être effectué par réaction en phase solvant, par exemple dans le chloroforme anhydre. Dans ce cas, la température de réaction peut aller de 5°C à 75°C, pendant une durée allant de quelques minutes à un jour et à des concentrations en polymère avant greffage comprises entre 1 et 50% en poids, par rapport au poids total de la solution.

Le copolymère porteur de groupes associatifs obtenu selon l'un ou l'autre des modes de réalisation ci-dessus peut se présenter notamment sous la forme de granulés ou de poudre. Il est mélangé au polymère vinylique halogéné décrit précédemment par tout moyen, notamment par calandrage, extrusion, mélange à l'état fondu dans une chambre de mélange, pressage, injection, mise en solution dans un solvant commun suivie d'une séparation du solvant.

Le copolymère porteur de groupes associatifs représente par exemple de 0,1 à 50% en poids de ce mélange, par exemple de 0,5 à 10% en poids dans le cas du PVC et de 5 à 40% en poids dans le cas du PVDF.

Il a été mis en évidence que ce copolymère permettait d'améliorer certaines propriétés mécaniques, chimiques et/ou thermiques du polymère vinylique halogéné auquel il est mélangé.

La présente invention a donc également pour objet l'utilisation d'un copolymère porteur de groupes associatifs tel que décrit précédemment, pour modifier une ou plusieurs des propriétés suivantes d'un polymère vinylique halogéné rigide ou plastifié : sa résistance au fluage, en particulier à plus de 25°C, sa température de transition vitreuse (Tg), son point de ramollissement Vicat, son adhésion aux surfaces métalliques telles que les surfaces en acier ou en aluminium, son allongement à la rupture, en particulier à plus de 25°C, sa tenue ou sa viscosité élongationnelle à l'état fondu, sa résistance chimique et sa stabilité thermique.

Hormis le copolymère portant les groupes associatifs selon l'invention, le polymère vinylique halogéné et les plastifiants des formulations plastifiées cités précédemment, la composition selon l'invention peut en outre renfermer divers additifs dont :
- des lubrifiants, tels que l'acide stéarique et ses esters (dont le Loxiol^{®} G12 de COGNIS), les esters cireux (dont le Loxiol^{®} G70 S de COGNIS), les cires de polyéthylène, la paraffine ou les lubrifiants acryliques (dont les Plastistrength^{®}, notamment L1000, d'ARKEMA),
- des pigments minéraux ou organiques, tels que le noir de carbone ou le dioxyde de titane,
- des stabilisants thermiques et/ou UV, tels que les stéarates d'étain, de plomb, de zinc, de cadmium, de baryum ou de sodium, dont le Thermolite^{®} d'ARKEMA,
- des co-stabilisants tels que les huiles naturelles époxydées, en particulier les huiles de soja époxydées telles que l'Ecepox^{®} PB3 d'ARKEMA,
- des anti-oxydants, par exemple phénoliques, soufrés ou phosphitiques,
- des charges ou renforts, notamment des charges cellulosiques, du talc, du carbonate de calcium, du mica ou de la wollastonite, du verre ou des oxydes ou hydrates métalliques,
- des agents antistatiques,
- des fongicides et biocides,
- des agents anti-choc, tels que les copolymères de MBS, dont le Clearstrength^{®} C303H d'ARKEMA, et les modifiants acryliques de type core-shell tels que les Durastrength^{®} d'ARKEMA,
- des agents gonflants tels que les azodicarbonamides, l'azo bis isobutyronitrile, le diéthyl azo-bis isobutyrate,
- des agents ignifugeants, dont le trioxyde d'antimoine, le borate de zinc et les phosphate esters bromés ou chlorés,
- des solvants, et
- leurs mélanges.

Ces additifs peuvent par exemple représenter de 0,1 à 50% du poids total de la composition.

En plus de la forme solide, cette composition peut se présenter notamment sous la forme d'émulsions, de suspensions ou de solutions.

La composition selon l'invention peut être utilisée pour la fabrication de revêtements, notamment de revêtements de sol et muraux, de meubles, de pièces en grillage ou de parties d'habitacle de véhicules automobiles (telles que des peaux de planches de bord, de volants et des habillages de portes) ; de vêtements ; de joints, notamment dans le bâtiment ou l'industrie automobile ; de films auto-adhésifs, alimentaires, agricoles, de papeterie ; de tôles et plaques de toit, ainsi que de plaques de bardage ; de profilés, notamment de douche et de fenêtre ; de volets, portes, plinthes, cornières ; de câbles ; et de dispositifs de transport ou de stockage de fluides, en particulier de tubes, de gaines, de pompes, de vannes ou de raccords ; de boîtiers électriques ; de tuyaux d'arrosage ; de bouteilles et flacons, de feuilles, notamment pour l'emballage ; de films étirables ; de poches à sang ou à soluté ; de tubes de transfusion ; de disques microsillons ; de jouets ; de panneaux ; de casques ; de chaussures ; de tentures, rideaux ou nappes ; de bouées ; de gants ; de stores ; de fibres ; de colles et adhésifs ; de membranes.

L'invention a donc également pour objet les utilisations précitées.

Cette composition peut être mise en forme par calandrage, extrusion, extrusion-soufflage, moulage par injection, rotomoulage, thermoformage, etc.

L'invention sera mieux comprise à la lumière des exemples suivants, donnés à des fins d'illustration seulement, et par référence aux figures annexées dans lesquelles :
- la Figure 1 illustre la vitesse de déformation dans un test de fluage à 60°C sous 18 MPa de contrainte, de la composition témoin ou « standard » et des compositions A, B et C selon l'invention,
- la Figure 2 illustre les propriétés de relaxation de contrainte à 60°C de compositions à base de PVC rigide et de copolymères selon l'invention,
- la Figure 3 illustre les propriétés d'aide à la mise en oeuvre (accélération de la gélification du PVC rigide) apportées par les copolymères selon l'invention,
- la Figure 4 illustre le comportement en stabilité thermique dynamique des compositions modifiées par des copolymères selon l'invention,
- la Figure 5 illustre l'amélioration de la tenue en fondu des compositions fondues contenant les copolymères selon l'invention.

### EXEMPLES

### Exemple 1 : Préparation d'un copolymère selon l'invention par greffage de groupes associatifs

On a greffé un agent de modification, à savoir l'UDETA portant un groupe associatif imidazolidonyle et un groupe réactif amine, sur un copolymère de méthacrylate de méthyle, d'acide méthacrylique et d'anhydride glutarique. Ce copolymère est lui même obtenu par cyclisation partielle d'un copolymère de méthacrylate de méthyle et d'acide méthacrylique. La réaction de cyclisation peut être réalisée à l'état fondu dans une extrudeuse ou tout autre mélangeur adéquat avec, éventuellement l'aide d'un catalyseur basique, tel que la soude. Cette réaction peut également être effectuée en étuve sous vide poussé. La réaction de greffage sur le copolymère portant les fonctions anhydride glutarique peut ensuite être effectuée, soit à l'état fondu en extrudeuse ou tout autre mélangeur adéquat, soit en solution dans un solvant approprié comme le chloroforme.

Précisément, on a partiellement cyclisé un copolymère de méthyl méthacrylate et acide méthacrylique commercialisé par ARKEMA sous la dénomination Altuglas^{®} HT121 (copolymère à env. 4% en poids de comonomère acide méthacrylique) en l'extrudant à deux reprises à travers une extrudeuse double-vis co-rotative de type Leistritz avec un diamètre de vis de 34 mm et un rapport longueur/diamètre de 32, à température d'extrusion de 280°C, et en utilisant 0,09% en poids d'une base forte comme l'hydroxyde de sodium ou le méthoxyde de sodium, NaOCH₃. Après deux passages, les groupes acide du copolymère initial avaient tendance à cycliser à plus de 90% par réaction avec soit un groupe acide voisin (départ d'eau), soit avec un groupe ester méthylique voisin (départ de méthanol).

Le copolymère ainsi obtenu a ensuite été greffé avec UDETA par extrusion du copolymère cyclisé en mélange avec l'UDETA dans le même type d'extrudeuse. Le profil de vis était configuré de telle sorte qu'il comporte consécutivement une zone de fusion (permettant la fusion du polymère), une zone d'injection (permettant l'injection de l'UDETA) et une zone de détente/dégazage (permettant l'élimination des volatils). Le profil de température de consigne des fourreaux était établi à 30/200/220/220/220/220/220/220/220°C, le débit à 20 kg/h, et la vitesse de rotation des vis à 150 tours par minute. Le copolymère a été introduit en trémie par l'intermédiaire d'un doseur gravimétrique. L'UDETA a été injecté après la zone de fusion à l'aide d'une micro-pompe doseuse par l'intermédiaire d'un injecteur permettant de réguler la pression d'injection, le débit étant suivi par perte de poids sur une balance. Sur la zone de dégazage, on a appliqué un vide dynamique absolu de 700 mm Hg pour assurer l'élimination des composés volatils. L'UDETA, d'une pureté supérieure à 80% en poids, a été introduit à raison de 2 % en masse, par rapport à l'ensemble copolymère-UDETA. En sortie d'extrudeuse, le produit a été refroidi et mis sous forme de granulés.

### Exemple 2 : Préparation par copolymérisation d'un copolymère porteur de groupes associatifs

Dans un réacteur métallique de 10 litres équipé d'un moteur d'agitation à vitesse variable, d'entrées pour l'introduction de réactifs, de piquages pour l'introduction de gaz inertes permettant de chasser l'oxygène, comme l'azote, et de sondes de mesure (par exemple, de température), d'un système de condensation de vapeurs avec reflux, d'une double enveloppe permettant de chauffer/refroidir le contenu du réacteur grâce à la circulation dans celle-ci d'un fluide caloporteur, on a introduit 3800 g d'eau déminéralisée et 200 g d'une solution aqueuse d'alcool polyvinylique Alcotex^{®} 72,5 de chez Harco (72,5% d'unités alcool vinylique et 27,5% d'unités acétate de vinyle) comme agent de suspension. On a démarré l'agitation à vitesse modérée, on a mis le système en chauffe de manière à atteindre au moins 70°C dans le réacteur et on a dégazé par bullage d'azote dans le liquide pendant au moins 15 minutes.

On a préparé par ailleurs, dans un récipient adéquat, un mélange comprenant :
- 1500 g de méthacrylate de méthyle d'Arkema ;
- 100 g d'acrylate d'éthyle d'Arkema ;
- 400 g de Norsocryl^{®} N102 d'Arkema, un mélange de 25% en poids de méthacrylate d'éthyl imidazolidone (MEIO) et de 75% de méthacrylate de méthyle ;
- 7,6 g de n-dodécyl mercaptan d'Arkema ; et
- 6 g de Luperox^{®} 26R, d'Arkema comme amorceur peroxydique.

Lorsque la température de l'eau dans le réacteur a atteint au moins 70°C, la vitesse d'agitation dans celui-ci a été portée à 350 tours par minute (tpm) et le mélange de monomères et d'additifs a été chargé dans le réacteur de manière à former une suspension aqueuse liquide. La température de consigne pour le fluide caloporteur de la double enveloppe du réacteur a ensuite été fixée de manière à ce que la température du réacteur soit supérieure à 70°C pendant la polymérisation. Le réacteur a ainsi été maintenu à une température de polymérisation d'au moins 70°C pendant un temps minimum de 4 heures. Un traitement de « cuisson » destiné à réduire au maximum le monomère résiduel a alors été appliqué en montant la température du réacteur à au moins 80°C pendant au moins 1 heure supplémentaire, puis la suspension a été refroidie à température ambiante.

Le produit obtenu se présentait sous la forme de particules macroscopiques (grains ou billes) en suspension aqueuse. La suspension a été retirée du réacteur et centrifugée ou filtrée de manière à séparer le polymère hydrophobe (grains) ainsi obtenu de la phase continue aqueuse. Les grains débarrassés de l'excès de phase aqueuse ont ensuite été mis à sécher dans une étuve ou un sécheur avec application de vide ou non et de préférence sans dépasser les 55°C pendant le séchage pour éviter leur agglomération. Les grains séchés ont été concassés et tamisés de manière à obtenir un produit final sous forme d'une poudre blanche homogène. La poudre ainsi obtenue sera désignée ci-après par « poudre PMMA1 ».

Une autre poudre de copolymère a été fabriquée de manière analogue, en utilisant comme mélange de monomères : 1100 g de méthacrylate de méthyle, 100 g d'acrylate d'éthyle et 800 g de Norsocryl^{®} N102 La poudre ainsi obtenue sera désignée ci-après par « poudre PMMA2 ».

Des synthèses de copolymères portant des groupes associatifs selon l'invention ont également été faites par polymérisation radicalaire contrôlée en suspension selon la méthode exemplifiée ci-dessous :
Dans un réacteur en verre de 1 litre équipé d'un moteur d'agitation à vitesse variable, d'entrées pour l'introduction de réactifs, de piquages pour l'introduction de gaz inertes permettant de chasser l'oxygène, comme l'azote, et de sondes de mesure (par exemple, de température), d'un système de condensation de vapeurs avec reflux, d'une double enveloppe permettant de chauffer/refroidir le contenu du réacteur grâce à la circulation dans celle-ci d'un fluide caloporteur, on a introduit 317,2 g d'eau déminéralisée et 0,73 g d'alcool polyvinylique Alcotex^{®} 72,5 de chez Harco comme agent de suspension. On a démarré l'agitation à vitesse modérée, on met le système en chauffe de manière à atteindre au moins 50°C dans le réacteur et on a dégazé par bullage d'azote dans le liquide pendant au moins 20 minutes.

On a préparé, par ailleurs, dans les récipients adéquates :
1) un mélange comprenant :
   - 87 g de méthacrylate de méthyle ; et
   - 59,8 g de Norsocryl^{®} N104 d'Arkema, un mélange de 50% en poids de méthacrylate d'éthyl imidazolidone (MEIO) et de 50% de méthacrylate de méthyle
2) 35,2 g d'une solution aqueuse (eau déminéralisée) à 7% en poids de l'alcoxyamine BlocBuilder^{®} d'Arkema, neutralisée avec quelques gouttes d'une solution aqueuse de potasse à 36% en poids, pour rendre le BlocBuilder^{®} soluble dans l'eau, ce qui se produit à un pH de 12.

Lorsque la température de l'eau dans le réacteur a atteint 50°C, la vitesse d'agitation dans le réacteur a été portée à 500 tours par minute (tpm) et le mélange de monomères (1) et la solution de l'alcoxyamine BlocBuilder^{®} (2) ont alors été additionnés en parallèle dans le réacteur, à l'aide de pompes de dosage, sur une période de 60 minutes. Pendant ce temps, la température du réacteur a été maintenue à au moins 50°C. A la fin de l'addition, la température a été maintenue à au moins 50°C pendant au moins 2 heures supplémentaires. Un traitement de « cuisson » destiné à réduire au maximum le monomère résiduel a alors été appliqué en montant la température du réacteur à au moins 60°C pendant au moins 1 heure supplémentaire, après la fin de l'addition des monomères. Après cette « cuisson », la suspension a été refroidie à température ambiante.

Le produit obtenu se présentait sous la forme de particules macroscopiques (grains ou billes) en suspension aqueuse. La suspension a été retirée du réacteur et filtrée de manière à séparer le polymère hydrophobe (grains) ainsi obtenu de la phase continue aqueuse. Les grains débarrassés de l'excès de phase aqueuse ont ensuite été mis à sécher dans une étuve avec application de vide ou non et en prenant la précaution de ne jamais dépasser les 55°C pendant le séchage pour éviter leur agglomération. Les grains séchés ont été concassés et tamisés de manière à obtenir un produit final sous forme d'une poudre blanche homogène. La poudre ainsi obtenue sera désignée ci-après par « poudre PMMA3 ».

Une autre poudre de copolymère a été fabriquée de manière analogue à ce qui a été décrit pour la poudre « PMMA3 », dans un réacteur en verre de 2 litres équipé comme précédemment et en partant de 1327,6 g d'eau déminéralisée et 2,94 g d'Alcotex^{®} 72,5, en utilisant comme mélange de monomères, 540 g de méthacrylate de méthyle et 47 g de Norsocryl^{®} N104, ainsi que 82,1 g d'une solution aqueuse (eau déminéralisée) à 12% en poids de l'alcoxyamine BlocBuilder^{®} d'Arkema, neutralisée avec quelques gouttes d'une solution aqueuse de potasse à 36% en poids, pour rendre le BlocBuilder^{®} soluble dans l'eau, ce qui se produit à un pH de 12. Le dégazage à l'azote a été effectué comme pour la synthèse du « PMMA3 » et la vitesse d'agitation utilisée était de 600 tours par minute. Les monomères, tout comme la solution d'alcoxyamine, ont été coulés en parallèle pendant 90 minutes. La température de polymérisation était d'au moins 50°C ; deux heures après la fin de la coulée, un recuit a été effectué pendant au moins 1,5 heures à au moins 70°C. La poudre ainsi obtenue sera désignée ci-après par « poudre PMMA4 ».

| Poudre | Masse molaire théorique | Nombre de groupes associatifs/chaîne | Tg (°C) |
|---|---|---|---|
| PMMA1 | 40.000 | 10 | 98 |
| PMMA2 | 40.000 | 20 | 94 |
| PMMA3 | 25.000 | 25 | 101 |
| PMMA4 | 25.000 | 5 | 101 |

### Exemple 3 : Préparation de compositions selon l'invention à base de PVC rigide

Les granulés obtenus à l'Exemple 1 et la poudre PMMA1 obtenue à l'Exemple 2 ont été chacun mélangés à raison de 5% en poids avec la même préparation pulvérulente (ci-après, "composition standard") à base de PVC rigide, pendant 5 minutes, en utilisant une calandre Collin à deux rouleaux chauffés à 190°C ; la vitesse de rotation des deux cylindres était ajustée respectivement à 20 et 24 tours par minute. Des feuilles de 0,5 mm d'épaisseur ont ainsi été obtenues.

La composition standard renfermait les constituants suivants indiqués dans le Tableau 1 ci-dessous :

**Tableau 1**

| Constituant | Nom commercial | Parties en poids |
|---|---|---|
| PVC | Lacovyl^{®} SO71 d'ARKEMA (KW 57) | 100 |
| Stabilisant (thioester d'octylétain) | Thermolite^{®} T892WF d'ARKEMA | 1,5 |
| Huile de soja époxydée | Ecepox^{®} PB3 d'ARKEMA | 1 |
| Cire de polyéthylène oxydée | AC316A^{®} d'HONEYWELL | 0,12 |
| Lubrifiant à base de monostéarate de glycérol | Loxiol^{®} G12 de COGNIS | 1,0 |
| Lubrifiant à base d'ester cireux | Loxiol^{®} G70S de COGNIS | 0,5 |
| Agent de mise en oeuvre à base de polymère acrylique | Plastistrength^{®}550 d'ARKEMA | 1,2 |
| Agent de mise en oeuvre à base de polymère styrène-acrylique | Plastistrength^{®} 770^{®} d'ARKEMA | 1,0 |
| Modifiant choc à base de copolymère MBS | Clearstrength^{®} C303H d'ARKEMA | 8 |

Les compositions préparées à partir des granulés de copolymère de l'Exemple 1 et de la poudre de copolymère PMMA1 de l'Exemple 2 ont respectivement été désignées par Composition A et Composition B.

Une composition C a par ailleurs été préparée, qui correspondait à la Composition A à laquelle on avait ajouté 0,3 pcr (partie pour 100 parties de résine) d'un lubrifiant (Plastistrength^{®} L1000 d'ARKEMA) pour faciliter la formation d'un film.

### Exemple 4 : Essais mécaniques et optiques

### Exemple 4A : Fluage à 60°C

Les Compositions A, B et C ont été soumises à un test de fluage à 60°C, en comparaison avec la composition standard de PVC décrite à l'Exemple 3.

### 4A-1. Protocole

Le test consiste à imposer une force constante, en traction, au matériau testé et à mesurer l'évolution de la déformation résultante au cours du temps. Pour une force donnée, plus la résistance au fluage du matériau est grande, plus faible est la déformation au cours du temps. Cette force est exprimée en contrainte, en rapportant la force à la section initiale de l'éprouvette, de façon à s'affranchir de l'effet de la géométrie de l'éprouvette utilisée. Cette éprouvette est typiquement une éprouvette de traction de type ISO 527 1BA découpée à l'emporte-pièce. Le test est mené sur un dynamomètre, type MTS810. Les cellules de charge utilisées peuvent mesurer une contrainte maximum de 2500 N. Les échantillons sont laissés une heure à 60°C avant le test. Une contrainte de 18 MPa est appliquée et la déformation résultante de l'échantillon est mesurée au cours du temps.

### 4A-2. Résultats

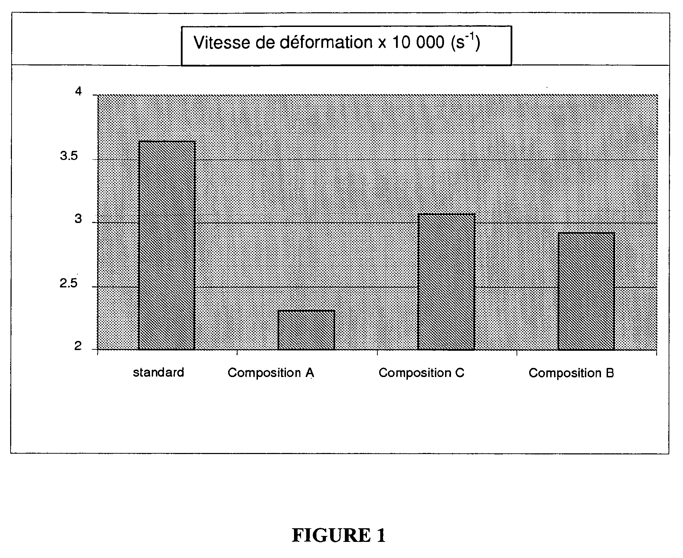

Comme illustré à la Figure 1, les Compositions A, B et C, renfermant le copolymère selon l'invention, présentent une meilleure résistance au fluage que la composition standard de PVC utilisée comme témoin.

Ce test démontre ainsi que les copolymères selon l'invention améliorent la résistance au fluage du PVC rigide à 60°C, quel que soit leur mode de préparation.

### Exemple 4B : Relaxation de contrainte à 60°C

Les Compositions A, B et C ont été soumises à un test de relaxation de contrainte à 60°C, en comparaison avec la composition standard de PVC décrite à l'Exemple 3.

### 4B-1. Protocole

Le test consiste à imposer une déformation constante, en traction, au matériau testé et à mesurer l'évolution de la force résultante au cours du temps. Pour une déformation donnée, plus la résistance du matériau est grande, plus faible est la relaxation de la force au cours du temps. Cette force est exprimée en contrainte, en rapportant la force à la section initiale de l'éprouvette, de façon à s'affranchir de l'effet de la géométrie de l'éprouvette utilisée. Cette éprouvette est typiquement une éprouvette de traction de type ISO 527 1BA découpée à l'emporte-pièce. Le test est mené sur un dynamomètre, type MTS810. Les cellules de charge utilisées peuvent mesurer une contrainte maximum de 2500 N. Les échantillons sont laissés une heure à 60°C avant le test. Une déformation de 2% est appliquée et la force exercée sur l'échantillon est mesurée au cours du temps.

### 4B-2. Résultats

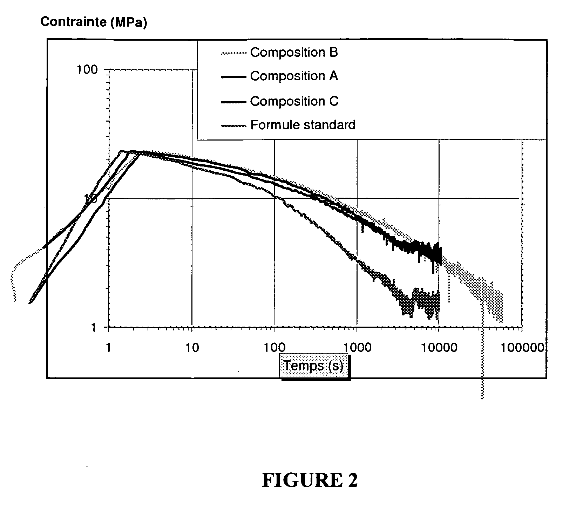

Comme illustré à la Figure 2, les Compositions A, B et C, renfermant le copolymère selon l'invention, présentent une meilleure résistance que la composition standard de PVC utilisée comme témoin. La différence est importante compte-tenu de l'échelle logarithmique.

Ce test démontre ainsi que les copolymères selon l'invention améliorent la résistance mécanique du PVC rigide à 60°C quel que soit leur mode de préparation.

### Exemple 4C. Couleur et transparence

On a réalisé des essais optiques (couleur et transparence) sur la Composition B comparée à la composition standard.

### 4C-1. Protocole

Les protocoles suivis pour la réalisation de ces mesures de couleur L* a* b* selon l'échelle de Hunter, indice de jaune, YI, ainsi que de transparence, clarté et voile (« haze ») sont connus de l'homme du métier et décrits dans les normes ASTM E313 et D1003.

### 4C-2. Résultats

Les propriétés optiques mesurées sur la composition B sont résumées dans le Tableau 2 ci-dessous :

**Tableau 2**

| | **Composition standard** | **Composition B** |
|---|---|---|
| Epaisseur (mm) | 0,5 | 0,5 |
| L* (noir→blanc) D65/10° | 92 | 92,9 |
| a* (vert→rouge) D65/10° | -0, 15 | -0,2 |
| b* (bleu→jaune) D65/10° | 6, 7 | 7,0 |
| Yi (ASTM E313) | 12,8 | 13,2 |
| Transmittance (%) | 91,6 écart type (0,2) | 92,7 écart type (0,3) |
| Voile (%) | 3,4 écart type (0,5) | 1,5 écart type (0,2) |
| Clareté (%) | 98,1 écart type (0,5) | 98 écart type (0,5) |

Ces mesures montrent la très bonne incorporation du copolymère PMMA1 de l'exemple 2, dans une formulation à base de PVC se traduisant par des propriétés de coloration et de transparence pratiquement inchangées.

### Exemple 4D. Autres tests

Une nouvelle composition standard, similaire à celle détaillée au Tableau 1, a été préparée avec, à la place des 0,5 parties en poids du lubrifiant Loxiol^{®} G70S, la même proportion en poids du lubrifiant Barolub^{®} 43C. A partir de cette formulation, trois compositions ont été préparées, à savoir :
1) la « composition témoin » incluant, comme détaillé dans le Tableau 1, 1,2 parties en poids de l'aide à la mise en oeuvre, Plastistrength^{®} P550,
2) la composition « Copol 1,2 » où le P550 est remplacé par 1,2 parties en poids du polymère PMMA1 de l'exemple 2,
3) la composition « Copol 5 » où le P550 est remplacé par 5 parties en poids du polymère PMMA1 de l'exemple 2. Des tests comparatifs de « gélification » du PVC rigide, de stabilité thermique dynamique, de tenue en fondu et de propriétés optiques ont ensuite été réalisés.

### 4D-1. Gélification du PVC. Protocole et Résultats

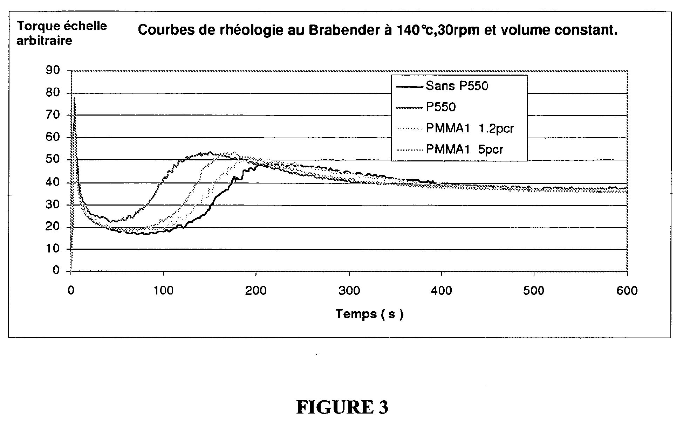

Les essais ont été réalisés dans une chambre de mélange de type Brabender à volume constant, à la température de 140°C et avec une vitesse de rotation des mobiles de 30 tours par minute. Le torque de mélange a ensuite été enregistré en fonction du temps de mélange. La Figure 3 montre les résultats de l'enregistrement. Après la première montée rapide du torque liée au passage de la poudre à l'état fondu, un deuxième maximum peut être repéré, correspondant à la « gélification » de la composition. Plus le temps d'apparition de ce deuxième pic est court et plus le pic est net (moins étalé), plus il y a un effet d'accélération de la gélification provoqué par l'additif (ici P550 ou copolymère PMMA1).

Ces mesures montrent que le copolymère PMMA1 a un effet d'aide à la mise en oeuvre du PVC rigide et ce, d'autant plus qu'il est connu de l'homme du métier que le PMMA non modifié par des groupes associatifs ne provoque pas cet effet d'accélération de la gélification.

### 4D-2. Propriétés optiques. Protocole et Résultats

Les propriétés optiques de feuilles préparées selon le protocole décrit à l'Exemple 3, mais avec une température de 175°C pendant 5 minutes, ont été mesurées selon les protocoles décrits à l'exemple 4C-1. Le tableau 3 ci-dessous montre les résultats des mesures de transparence et de couleur (YI).

**Tableau 3**

| | Composition témoin sans P550 | Composition témoin avec P550 | Composition Copol 1,2 | Composition Copol 5 |
|---|---|---|---|---|
| Epaisseur (mm) | 0,5 | 0,5 | 0,5 | 0,5 |
| Transmittance (%) | 92 | 91 | 93 | 93 |
| Haze (%) | 2,3 | 2,9 | 2 | 2 |
| Clareté (%) | 98 | 99 | 98 | 98 |
| YI (ASTM E313) | 12 | 13 | 12 | 13 |

Ces mesures montrent la très bonne incorporation du copolymère PMMA1 de l'exemple 2, dans une formulation à base de PVC se traduisant par des propriétés de coloration et de transparence pratiquement inchangées.

### 4D-3. Stabilité thermique dynamique. Protocole et Résultats

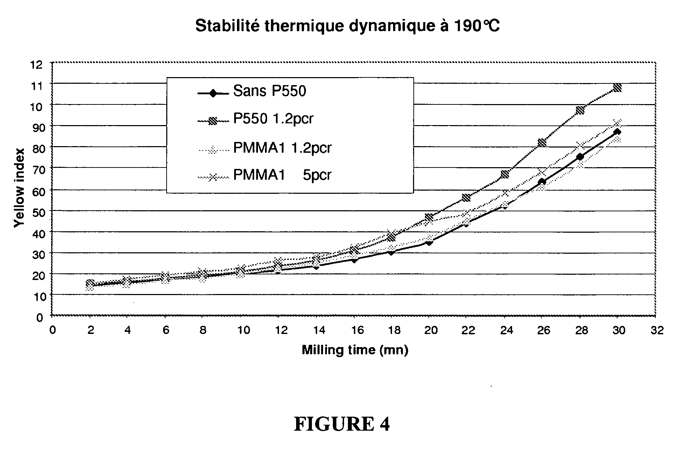

Le procédé de mise en oeuvre utilisant la calandre Collin de l'exemple 3 est utilisé avec une température de cylindres de 200°C. A des intervalles réguliers, des échantillons sont sortis de la calandre pour mesurer leurs propriétés optiques, comme décrit ci-dessus, et en particulier l'indice de jaune ou Y.I. La Figure 4 montre les résultats obtenus ; moins l'indice de jaune est élevé, meilleure est la stabilité thermique de la composition.

Ces mesures montrent le très bon comportement des copolymères portant les groupes associatifs selon l'invention, puisque l'indice de jaune reste proche de celui du témoin sans aide à la mise en oeuvre, alors que les aides à la mise en oeuvre traditionnels comme le Plastistrength 550 dégradent la stabilité thermique dynamique et ce, de manière plus marquée lorsque le temps de calandrage augmente.

### 4D-4. Tenue du fondu (melt-strength). Protocole et Résultats

Les compositions témoin avec et sans l'aide à la mise en oeuvre P550 ainsi que Copol 1,2 et Copol 5 décrites précédemment ont été extrudées et passées à travers un appareil de type Rheotens-Göttfert. Les conditions d'extrusion du test sont résumées dans le Tableau 4 ci-dessous :

**Tableau 4**

| | Composition témoin sans P550 | Composition témoin avec P550 (1,2 parties) | Composition Copol 1,2 Avec PMMA1 | Composition Copol 5 Avec PMMA1 |
|---|---|---|---|---|
| Vitesse de vis (tpm) | 25 | 25 | 25 | 25 |
| T zone 1 (°C) | 130 | 130 | 130 | 130 |
| T zone 2 (°C) | 170 | 170 | 170 | 170 |
| T zone 3 (°C) | 170 | 170 | 170 | 170 |
| T filière (°C) | 180 | 180 | 180 | 180 |
| T masse (°C) | 150 | 150 | 150 | 150 |
| T masse en tête (°C) | 180 | 184 | 185 | 180 |
| Pression 18D (bar) | 550 | 575 | 560 | 550 |
| Pression 22D (bar) | 610 | 620 | 605 | 600 |
| Pression 25D (bar) | 340 | 350 | 340 | 340 |
| Pression en tête (bar) | 230 | 240 | 230 | 230 |
| Torque (N m) | 100 | 103 | 100 | 100 |
| Débit (kg/hr) | 1,3 | 1,4 | 1,4 | 1,4 |

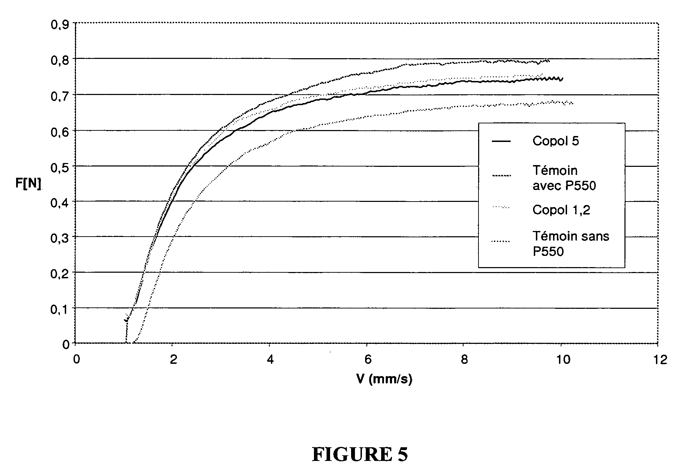

Les résultats d'élongation du test sont présentés dans le Tableau 5 ci-dessous. Ces résultats correspondent au passage à travers les cylindres et montrent que l'élongation est comparable pour toutes les compositions. Par contre, la tenue du fondu est améliorée avec une aide à la mise en oeuvre classique tout comme avec les copolymères portant des groupes associatifs selon l'invention. Ces résultats sont illustrés graphiquement à la Figure 5.

**Tableau 5**

| | Composition témoin sans P550 | Composition témoin avec P550 (1,2 parties) | Composition Copol 1,2 Avec PMMA1 | Composition Copol 5 Avec PMMA1 |
|---|---|---|---|---|
| Accélération (mm/s2) | 24 | 24 | 24 | 24 |
| V0 (mm/s) | 93 | 96 | 93 | 88 |
| Vmax (rupture) (mm/s) | 831 | 884 | 850 | 878 |
| Fmax (N) | 0.67 | 0,79 | 0,75 | 0,75 |
| (V/V0)max (élongation) | 10,2 | 9,8 | 9,7 | 10,0 |
| Contrainteₘₐₓ (Mpa) | 2,19 | 2,46 | 2,31 | 2,38 |
| Débit (kg/hr) | 1,4 | 1,4 | 1,4 | 1,3 |
| T masse (°C) | 180 | 180 | 180 | 180 |

L'ensemble des tests de l'exemple 4 montre que les copolymères portant des groupes associatifs selon l'invention sont capables d'améliorer les propriétés des compositions donnant lieu à du PVC rigide et transparent, telles que la gélification du PVC, la stabilité thermique dynamique et la tenue des fondus, sans dégrader les propriétés optiques. Ces propriétés sont aussi améliorées par des aides à la mise en oeuvre classiques, mais ces dernières dégradent la stabilité thermique dynamique des compositions significativement plus que les copolymères selon l'invention.

### Exemple 5 : Préparation de compositions selon l'invention à base de PVC plastifié

On a préparé quatre compositions renfermant chacune 5 parties en poids d'une poudre de copolymère de l'Exemple 2, respectivement PMMA1, PMMA2, PMMA3 et PMMA4 dans un mélange de 100 parties en poids de PVC LACOVYL^{®} (KW70) d'ARKEMA, 5 parties en poids d'huile de soja époxydée, 50 parties en poids de dioctyl phtalate (DOP) et 4 parties en poids d'un stabilisant à base de Ca/Zn liquide.

Ces compositions seront respectivement désignées par la suite par Compositions 1, 2, 3 et 4.

### Exemple 6 : Essais mécaniques

Les compositions 1 à 4 préparées à l'Exemple 5 ont été soumises à des tests de traction, ainsi qu'à une mesure de leur dureté Shore selon des méthodes bien connues de l'homme du métier et par rapport à un témoin ne contenant pas les copolymères de l'invention. On a par ailleurs évalué leur stabilité thermique statique à 200°C en déterminant le temps maximum avant que les échantillons revêtent un aspect brulé. Ces tests sont conduits en relatif par rapport à un témoin ne contenant pas les copolymères de l'invention, pour lequel la stabilité thermique statique est de 21 minutes.

Les résultats de ces essais sont rassemblés dans le Tableau 6 ci-dessous.

**Tableau 6**

| Compo. | Dureté Shore (A) | Stabilité à 200°C (min) | Module (MPa) d'Young | Résist. à la rupture (MPa) | Allong. à la rupture (%) |
|---|---|---|---|---|---|
| Témoin | 75 | 21 | 9 | 18 | 340 |
| 1 | 78 | 26 | 9,5 | 17,5 | 360 |
| 2 | 79 | 27 | 9 | 18 | 360 |
| 3 | 79 | 32 | 9 | 18 | 350 |
| 4 | 79 | 38 | 9 | 18,5 | 365 |

Il ressort de ces essais que les compositions 1 à 4 renfermant le copolymère porteur de groupes associatifs selon l'invention présentent un plus grand allongement à la rupture et surtout une stabilité améliorée à haute température sans affecter sensiblement les autres propriétés mécaniques.

### Exemple 7 : Essais de fluage à température ambiante

Des éprouvettes des compositions 1 et 2 de l'Exemple 5 ont été soumises à un test de fluage comme décrit à l'exemple 4A, mais à température ambiante. Un échantillon de la composition témoin sans copolymère a également été soumis au test. La contrainte appliquée était de 6,25 MPa et le test a duré 15 minutes. Les valeurs de vitesse de déformation obtenues étaient les suivantes :

| | |
|---|---|
| Témoin : | 54,2 mm/hr |
| Composition 1 : | 44,4 mm/hr |
| Composition 2 : | 51,1 mm/hr |

Ces résultats montrent l'effet favorable des copolymères de l'invention pour diminuer le fluage des compositions de PVC plastifié.

## Revendications

1. Composition comprenant : (a) au moins un polymère vinylique halogéné et (b) au moins un copolymère renfermant (i) des motifs issus d'un premier monomère (A) rendant ledit copolymère compatible avec ledit polymère vinylique halogéné et (ii) des motifs issus d'un second monomère (B) porteur d'au moins un groupe associatif choisi parmi les groupes imidazolidonyle, triazolyle, triazinyle, bis-uréyle et uréido-pyrimidyle, de préférence imidazolidonyle.

2. Composition selon la revendication 1, **caractérisée en ce que** le polymère vinylique halogéné est choisi parmi : le poly(chlorure de vinyle) (PVC) ; le poly(chlorure de vinyle chloré) (PVCC) ; les copolymères de chlorure de vinyle avec des monomères choisis parmi l'acrylonitrile, l'éthylène, le propylène, ou l'acétate de vinyle ; le poly(chlorure de vinylidène) ; et leurs mélanges.

3. Composition selon la revendication 2, **caractérisée en ce que** le polymère vinylique halogéné est le poly(chlorure de vinyle).

4. Composition selon la revendication 1, **caractérisée en ce que** le polymère vinylique halogéné est choisi parmi :
- le poly(fluorure de vinylidène) (PVDF),
- les copolymères de fluorure de vinylidène avec par exemple l'hexafluoropropylène (HFP), le chlorotrifluoroéthylène (CTFE), l'hexafluoropropylène (HFP), le trifluoroéthylène (VF3) ou le tétrafluoroéthylène (TFE),
- les homo- et copolymères de trifluoroéthylène (VF3),
- les copolymères fluoroéthylène / propylène (FEP),
- les copolymères d'éthylène avec le fluoroéthylène/propylène (FEP), le tétrafluoroéthylène (TFE), le perfluorométhylvinyl éther (PFMVE), le chlorotrifluoroéthylène (CTFE) ou l'hexafluoropropylène (HFP), et
- leurs mélanges,
de préférence le PVDF.

5. Composition selon l'une quelconque des revendications 1 à 4, **caractérisée en ce que** le polymère vinylique halogéné représente de 1 à 99,5 % en poids, et de préférence de 50 à 99% en poids par rapport au poids total de la composition.

6. Composition selon l'une quelconque des revendications 1 à 5, **caractérisée en ce que** le monomère (A) représente au moins 20% en mole du copolymère.

7. Composition selon l'une quelconque des revendications 1 à 6, **caractérisée en ce que** ledit monomère (A) est un monomère choisi parmi le méthacrylate de méthyle, le (méth)acrylate de (méthoxy)polyéthylèneglycol, l'acrylonitrile ou l'anhydride maléique.

8. Composition selon l'une quelconque des revendications 1 à 7, **caractérisée en ce que** le copolymère est susceptible d'être obtenu par greffage des groupes associatifs sur un copolymère déjà constitué comprenant, outre le monomère (A), un monomère (B') renfermant au moins une fonction réactive, telle qu'une fonction acide, anhydride, alcool, mercaptan, amine, époxy ou isocyanate, de préférence anhydride, par réaction d'un ou plusieurs agents de modification, portant d'une part un groupe associatif, et d'autre part un groupe réactif, choisi parmi les groupes amine, mercaptan, époxy, isocyanate, anhydride, alcool, de préférence amine, ledit groupe réactif étant susceptible de former une liaison covalente avec ladite fonction réactive.

9. Composition selon la revendication 8, **caractérisée en ce que** le copolymère renfermant le monomère (B') est susceptible d'être obtenu par cyclisation d'un copolymère de (méth)acrylate d'alkyle et d'acide (méth)acrylique, dans des conditions de catalyse basique.

10. Composition selon l'une quelconque des revendications 1 à 7, **caractérisée en ce que** le copolymère est susceptible d'être obtenu à partir :
- d'une part, d'un monomère (A) qui est un monomère (méth)acrylique choisi parmi : le méthacrylate de méthyle, le (méth)acrylate de (méthoxy)polyéthylèneglycol et l'acrylonitrile ; ou l'anhydride maléique,
- d'autre part, d'un monomère (B) porteur de groupes associatifs, de préférence de groupes imidazolidonyle, qui est avantageusement choisi parmi : le méthacrylate d'éthylimidazolidone (ou MEIO) et le méthacrylamide d'éthylimidazolidone (ou WAM II), et
- éventuellement, d'un ou plusieurs autres monomères choisis parmi les acides acrylique ou méthacrylique, leurs esters, leurs amides ou leurs sels, l'acide itaconique, ses esters, ses amides ou ses sels, et le styrène et ses dérivés comme le 4-styrène sulphonate.

11. Utilisation d'un copolymère porteur de groupes associatifs, tel que décrit dans l'une quelconque des revendications 1 à 10, pour modifier une ou plusieurs des propriétés suivantes d'un polymère vinylique halogéné rigide ou plastifié : sa résistance au fluage, en particulier à plus de 25°C, sa température de transition vitreuse (Tg), son point de ramollissement Vicat, son adhésion aux surfaces métalliques telles que les surfaces en acier ou en aluminium, son allongement à la rupture, en particulier à plus de 25°C, sa tenue ou sa viscosité élongationnelle à l'état fondu, sa résistance chimique et sa stabilité thermique.

12. Utilisation de la composition selon l'une quelconque des revendications 1 à 10 pour la fabrication de revêtements, notamment de revêtements de sol et muraux, de meubles, de pièces en grillage ou de parties d'habitacle de véhicules automobiles telles que des peaux de planches de bord, de volants et des habillages de portes ; de vêtements ; de joints, notamment dans le bâtiment ou l'industrie automobile ; de films auto-adhésifs, alimentaires, agricoles, de papeterie ; de tôles et plaques de toit, ainsi que de plaques de bardage ; de profilés, notamment de douche et de fenêtre ; de volets, portes, plinthes, cornières ; de câbles ; et de dispositifs de transport ou de stockage de fluides, en particulier de tubes, de gaines, de pompes, de vannes ou de raccords ; de boîtiers électriques ; de tuyaux d'arrosage ; de bouteilles et flacons, de feuilles, notamment pour l'emballage ; de films étirables ; de poches à sang ou à soluté ; de tubes de transfusion ; de disques microsillons ; de jouets ; de panneaux ; de casques ; de chaussures ; de tentures, rideaux ou nappes ; de bouées ; de gants ; de stores ; de fibres ; de colles et adhésifs ; de membranes.

## Claims

1. A composition comprising: (a) at least one halogenated vinyl polymer and (b) at least one copolymer containing (i) units derived from a first monomer (A) that makes said copolymer compatible with said halogenated vinyl polymer and (ii) units derived from a second monomer (B) bearing at least one associative group chosen from imidazolidonyl, triazolyl, triazinyl, bis-ureyl and ureidopyrimidyl groups, preferably imidazolidonyl.

2. The composition as claimed in claim 1, **characterized in that** the halogenated vinyl polymer is chosen from: poly(vinyl chloride) (PVC); poly(chlorinated vinyl chloride) (PCVC); copolymers of vinyl chloride with monomers chosen from acrylonitrile, ethylene, propylene and vinyl acetate; poly(vinylidene chloride); and mixtures thereof.

3. The composition as claimed in claim 2, **characterized in that** the halogenated vinyl polymer is poly(vinyl chloride).

4. The composition as claimed in claim 1, **characterized in that** the halogenated vinyl polymer is chosen from:
- poly(vinylidene fluoride) (PVDF),
- copolymers of vinylidene fluoride with, for example, hexafluoropropylene (HFP), chlorotrifluoroethylene (CTFE), hexafluoropropylene (HFP), trifluoroethylene (VF3) or tetrafluoroethylene (TFE),
- trifluoroethylene (VF3) homopolymers and copolymers,
- fluoroethylene/propylene (FEP) copolymers,
- copolymers of ethylene with fluoroethylene/propylene (FEP), tetrafluoroethylene (TFE), perfluoromethyl vinyl ether (PFMVE), chlorotrifluoroethylene (CTFE) or hexafluoropropylene (HFP), and
- mixtures thereof,
preferably PVDF.

5. The composition as claimed in any one of claims 1 to 4, **characterized in that** the halogenated vinyl polymer represents from 1% to 99.5% by weight and preferably from 50% to 99% by weight relative to the total weight of the composition.

6. The composition as claimed in any one of claims 1 to 5, **characterized in that** the monomer (A) represents at least 20 mol% of the copolymer.

7. The composition as claimed in any one of claims 1 to 6, **characterized in that** said monomer (A) is a monomer chosen from methyl methacrylate, (methoxy)polyethylene glycol (meth)acrylate, acrylonitrile or maleic anhydride.

8. The composition as claimed in any one of claims 1 to 7, **characterized in that** the copolymer may be obtained by grafting associative groups onto an already-existing copolymer comprising, besides the monomer (A), a monomer (B') containing at least one reactive function, such as an acid, anhydride, alcohol, mercaptan, amine, epoxy or isocyanate function, preferably an anhydride function, by reaction of one or more modifiers, bearing, on the one hand, an associative group, and, on the other hand, a reactive group, chosen from amine, mercaptan, epoxy, isocyanate, anhydride and alcohol groups, preferably amine groups, said reactive group being capable of forming a covalent bond with said reactive function.

9. The composition as claimed in claim 8, **characterized in that** the copolymer containing the monomer (B') may be obtained by cyclization of a copolymer of an alkyl (meth)acrylate and of (meth)acrylic acid, under basic catalysis conditions.

10. The composition as claimed in any one of claims 1 to 7, **characterized in that** the copolymer may be obtained from:
- on the one hand, a monomer (A) that is a (meth)acrylic monomer chosen from: methyl methacrylate, (methoxy)polyethylene glycol (meth)acrylate and acrylonitrile; or maleic anhydride,
- on the other hand, a monomer (B) bearing associative groups, preferably imidazolidinyl groups, which is advantageously chosen from: ethylimidazolidone methacrylate (or EIOM) and ethylimidazolidone methacrylamide (or WAM II) and
- optionally, one or more other monomers chosen from acrylic or methacrylic acids, esters thereof, amides thereof or salts thereof, itaconic acid, esters thereof, amides thereof or salts thereof, and styrene and derivatives thereof, for instance 4-styrene sulfonate.

11. The use of a copolymer bearing associative groups as described in any one of claims 1 to 10, for modifying one or more of the following properties of a rigid or plasticized halogenated vinyl polymer: its creep resistance, in particular above 25°C, its glass transition temperature (Tg), its Vicat softening point, its adhesion to metallic surfaces such as steel or aluminum surfaces, its elongation at break, in particular above 25°C, its melt strength or melt elongation viscosity, its chemical resistance and its thermal stability.

12. The use of the composition as claimed in any one of claims 1 to 10 for the manufacture of coatings, especially floor and wall coatings, furniture, grille components or trim parts of motor vehicles such as dashboard, steering wheel and door trims; clothing; seals, especially in the building or motor vehicle industry; self-adhesive, food-grade, agricultural or stationery films; roof sheets and plates, and also siding plates; profiles, especially for showers and windows; shutters, doors, plinths, cornices; cables; and fluid transportation or storage devices, in particular tubes, sheaths, pumps, valves or adaptors; switch boxes; watering tubes; bottles and flasks, sheets, especially for wrapping; stretchable films; blood or solution bags; transfusion tubes; microgroove disks; toys; panels; helmets; shoes; drapes, curtains or tablecloths; buoys; gloves; blinds; fibers; glues and adhesives; membranes.

## Patentansprüche

1. Zusammensetzung aufweisend: (a) mindestens ein halogeniertes Vinylpolymer und (b) mindestens ein Copolymer, das (i) von einem ersten Monomer (A) stammende Einheiten, die das Copolymer mit dem halogenierten Vinylpolymer verträglich machen, und (ii) von einem zweiten Monomer (B), das mindestens eine assoziative Gruppe trägt, die ausgewählt ist aus den Imidazolidonyl-, Triazolyl-, Triazinyl-, Bis-ureyl- und Ureido-pyrimidyl-Gruppen, bevorzugt Imidazolidonyl-Gruppen, stammende Einheiten enthält.

2. Zusammensetzung nach Anspruch 1, **dadurch gekennzeichnet, dass** das halogenierte Vinylpolymer ausgewählt ist aus: Polyvinylchlorid (PVC); chloriertem Polyvinylchlorid (PVCC); Copolymeren von Vinylchlorid mit Monomeren, die ausgewählt sind aus Acrylnitril, Ethylen, Propylen oder Vinylacetat; Polyvinylidenchlorid; und ihren Mischungen.

3. Zusammensetzung nach Anspruch 2, **dadurch gekennzeichnet, dass** das halogenierte Vinylpolymer Polyvinylchlorid ist.

4. Zusammensetzung nach Anspruch 1, **dadurch gekennzeichnet, dass** das halogenierte Vinylpolymer ausgewählt ist aus:
- Polyvinylidenfluorid (PVDF),
- den Copolymeren von Vinylidenfluorid mit beispielsweise Hexafluorpropylen (HFP), Chlortrifluorethylen (CTFE), Hexafluorpropylen (HFP), Trifluorethylen (VF3) oder Tetrafluorethylen (TFE),
- den Homo- und Copolymeren von Trifluorethylen (VF3),
- den Fluorethylen/Propylen-Copolymeren (FEP),
- den Copolymeren von Ethylen mit Fluorethylen/Propylen (FEP), Tetrafluorethylen (TFE), Perfluormethylvinylether (PFMVE), Chlortrifluorethylen (CTFE) oder Hexafluorpropylen (HFP), und
- ihren Mischungen,
bevorzugt PVDF.

5. Zusammensetzung nach einem der Ansprüche 1 bis 4, **dadurch gekennzeichnet, dass** das halogenierte Vinylpolymer 1 bis 99,5 Gewichts-%, und bevorzugt 50 bis 99 Gewichts-%, bezogen auf das Gesamtgewicht der Zusammensetzung ausmacht.

6. Zusammensetzung nach einem der Ansprüche 1 bis 5, **dadurch gekennzeichnet, dass** das Monomer (A) mindestens 20 Mol-% des Copolymers ausmacht.

7. Zusammensetzung nach einem der Ansprüche 1 bis 6, **dadurch gekennzeichnet, dass** das Monomer (A) ein Monomer ist, das ausgewählt ist aus Methylmethacrylat, dem (Meth)acrylat von (Methoxy)polyethylenglycol, Acrylnitril oder Maleinsäureanhydrid.

8. Zusammensetzung nach einem der Ansprüche 1 bis 7, **dadurch gekennzeichnet, dass** das Copolymer erhalten werden kann durch Pfropfen von assoziativen Gruppen auf ein bereits dargestelltes Copolymer, das außer dem Monomer (A) ein Monomer (B') aufweist, das mindestens eine reaktive Funktion, wie eine Säure-, Anhydrid-, Alkohol, Mercaptan-, Amin-, Epoxy- oder Isocyanat-Funktion, bevorzugt eine Anhydrid-Funktion, enthält, durch Reaktion von einem oder mehreren Modifizierungsmitteln, die einerseits eine assoziative Gruppe und andererseits eine reaktive Gruppe, die ausgewählt ist aus den Amin-, Mercaptan-, Epoxy-, Isocyanat-, Anhydrid-, AlkoholGruppen, bevorzugt Amin-Gruppen, tragen, wobei die reaktive Gruppe mit der reaktiven Funktion eine kovalente Bindung bilden kann.

9. Zusammensetzung nach Anspruch 8, **dadurch gekennzeichnet, dass** das Copolymer, das das Monomer (B') enthält, erhalten werden kann durch Zyklisierung eines Copolymers aus Alkyl-(meth)acrylat und (Meth)acrylsäure unter Bedingungen einer basischen Katalyse.

10. Zusammensetzung nach einem der Ansprüche 1 bis 7, **dadurch gekennzeichnet, dass** das Copolymer erhalten werden kann ausgehend von:
- einerseits einem Monomer (A), das ein (Meth)acrylmonomer ist, das ausgewählt ist aus: Methylmethacrylat, dem (Meth)acrylat von (Methoxy)polyethylenglycol und Acrylnitril; oder Maleinsäureanhydrid,
- andererseits einem Monomer (B), das assoziative Gruppen trägt, bevorzugt Imidazolidonyl-Gruppen, das vorteilhafterweise ausgewählt ist aus: Ethylimidazolidon-methacrylat (oder MEIO) und Ethylimidazolidon-methacrylamid (oder WAM II), und
- optional einem oder mehreren anderen Monomeren, die ausgewählt sind aus den Acrylsäuren oder Methacrylsäuren, ihren Estern, ihren Amiden oder ihren Salzen, Itaconsäure, ihren Estern, ihren Amiden oder ihren Salzen, und Styrol und seinen Derivaten wie 4-Styrolsulfonat.

11. Verwendung eines Copolymers, das assoziative Gruppe trägt, wie in einem der Ansprüche 1 bis 10 beschrieben, zum Modifizieren einer oder mehrerer der folgenden Eigenschaften eines harten oder plastifizierten halogenierten Vinylpolymers: seiner Fließfestigkeit, insbesondere oberhalb von 25°C, seiner Glasübergangstemperatur (Tg), seines Vicat-Erweichungspunkts, seiner Anhaftung an metallischen Oberflächen wie Oberflächen aus Stahl oder aus Aluminium, seiner Bruchdehnung, insbesondere oberhalb von 25°C, seiner Dehn-Widerstandsfähigkeit oder seiner Dehnviskosität im geschmolzenen Zustand, seiner chemischen Beständigkeit und seiner thermischen Stabilität.

12. Verwendung der Zusammensetzung nach einem der Ansprüche 1 bis 10 zur Herstellung von Belägen bzw. Bezügen, insbesondere von Fußbodenbelägen und Wandbelägen, von Möbelbezügen, von Gitterteilen oder von Automobil-Karosseriegehäuseteilen wie Außenschichten von Instrumententafeln, von Lenkrädern und Türverkleidungen; von Kleidungsstücken; von Dichtungen, insbesondere in der Bauindustrie oder der Automobilindustrie; von Selbstklebefolien, Folien für Nahrungsmittel, landwirtschaftliche Folien, Papierindustrie-Folien; von Dachbelägen und Dachplatten, ebenso wie Fassadenverkleidungsplatten; von Profilen, insbesondere Duschprofilen und Fensterprofilen; von Fensterläden, Türen, Sockelleisten, Winkelprofilen; von Kabeln; und von Einrichtungen zum Transport oder zur Lagerung von Fluiden, insbesondere von Rohren, von Hüllen, von Pumpen, von Ventilen oder Verbindungselementen; von Elektrogehäusen; von Wasserschläuchen; von Flaschen und Flakons, von Folien, insbesondere für die Verpackung; von dehnbaren Filmen; von Beuteln für Blut oder Lösungen; von Transfusionsschläuchen; von Langspielplatten; von Spielzeugen; von Schildern; von Helmen; von Schuhwaren; von Behängen, Vorhängen oder Tischtüchern; von Bojen, von Handschuhen, von Stores; von Fasern; von Leimen und Klebstoffen; von Membranen.
